# NEW EUROPEAN PATENT SPECIFICATION

(11) **EP 2 029 656 B2**
(45) Date of publication and mention of the opposition decision: **05.03.2014**
(45) Mention of the grant of the patent: 17.11.2010
(21) Application number: 07765447.3
(22) Date of filing: 15.06.2007
(51) Int. Cl.: C08G 59/56, C08G 59/62

(54) **COATING SYSTEM**
BESCHICHTUNGSSYSTEM
SYSTÈME DE REVÊTEMENT

(30) Priority: 16.06.2006 EP 06115606
(43) Date of publication of application: 04.03.2009
(73) Proprietor: Huntsman Advanced Materials (Switzerland) GmbH, 4057 Basel (CH)
(72) Inventor: MULLER-FRISCHINGER, Isabelle Marie, 68640 Riespach (FR)
(74) Representative: Bohest AG
(86) International application number: PCT/EP2007/055965
(87) International publication number: WO 2007/144425

(56) References cited:
- EP-A- 1 674 495
- EP-A2- 0 266 306
- EP-A2- 0 439 171
- WO-A-99/29757
- US-A- 3 306 809
- US-A- 4 221 890
- US-A- 4 866 133
- US-A- 4 916 187
- US-B1- 6 649 729

## Description

This invention relates to rapid setting coating systems for low temperature cure which are based on compositions comprising epoxy resins and, as hardeners, blends of amines and phenol-formaldehyde novolacs, said systems are especially useful as protective coatings for metallic and mineral substrates.

There has long been a desire to formulate curing agents on the basis of polyethylene-polyamines which cures in short time without giving the undesired side effect of blushing and exudation. Indeed, the conventional amine curing agents with primary amine groups as they are stored or cured in high humidity environments react with the carbon dioxide/moisture contained in the air leading to the formation of carbamates that may cause the blooming and exudation.

A technical solution to prevent carbamate formation is the use of epoxy-amine adducts, which have the property to be less reactive with carbon dioxide, mainly due to the reduced concentration of the primary amines. However this technical solution is far to resorb the problem of exudation strongly visible in some case of adducts made from specific aliphatic amines like diethylenediamine (DETA). Very often the addition of accelerators such as tertiary amines, acids, hydroxylamines, Mannich bases or phenols, which are methods that are already know in the art, do only partially reduce these undesired effects. It has to be mentioned that the problem becomes much more worse as the cure temperature goes below room temperature. Under these conditions the formation of carbamates increases due to a reduced reactivity of the amine group and therefore an increase of the probability of reaction of the amine group with the carbone dioxide. Many applications fields, however, afford more and more such temperature range where high curing rate and minimized side effects are required as well.

The patent application WO 99/29757 describes the use of a phenol-formaldehyde novolac as accelerator for amine/epoxy systems. With respect to the above mentioned polyamines, it was, however, observed that using the upper limit of 25 wt% of phenol-formaldehyde novolac, it was possible only to reduce partially the blushing and exudation of such polyamines hardeners when they were formulated with standard epoxies, leading to tacky surface and dust free times, which are too long for ambient temperature cure applications (of about 23°C, 50% r.h.). It was therefore an object of the instant invention to overcome the problem of exudation inherent to such specific amines by blending them with high concentrations of phenol-formaldehyde novolacs.

Reactive heat curable epoxy resin compositions are known from patent application EP 0 266 301 A2 disclosing polyamines blended with high concentrations of different polyphenols, for instance the use of phenol-formaldehyde novolacs, to produce "solid solutions" of latent amine hardeners that are further dispersed in a dried and powdery form into a liquid epoxy resin. According to the described examples of this invention, the obtained curing agents are without exception solid solutions having melting temperatures of almost 70°C and above. The said latent heat curable, liquid epoxy resin compositions have good storage stability and can be fast cured with curing temperatures of between 60° and 200°C and are intended for use as adhesives.

As a result of extensive research and experimentation, it was surprisingly found that specific blends of amines with high percentages of novolacs leads to the desired still liquid hardeners at 25°C. Use of said blends as hardeners for epoxy resins provides systems allowing fast curing at room temperature while having fast drying properties and an improved resistance against humidity/CO₂. Said inventive systems show almost no formation of carbamates at room temperature if compared to systems cured with neat polyamines or their adducts prepared from the epoxy resins.

Therefore a first object of the invention are curable compositions comprising
a) an epoxy resin containing on average more than one epoxy group per molecule,
b) as curing agent a hybrid hardener, whereby said hardener is a liquid hardener blend with a viscosity of less than 150 000 mPa·s at 25°C comprising
b1) an aminic compound selected from aliphatic, cycloaliphatic, and araliphatic amines, whereby said aminic compound contains, on average per molecule, at least two reactive hydrogen atoms bound to nitrogen atoms, and
b2) a polymeric phenol novolac, and wherein said novolac is used in an amount of from 46 % to 62 % by weight, based on the total weight of the hardener blend b1) and b2).

The compositions according to the present invention are used for providing protective coatings and adhesives in application fields like civil engineering, marine architectural and maintenance.

Suitable epoxy compounds, additionally used according to this invention for the preparation of the curable compositions, are commercially available products which contain on average more than one epoxy group per molecule, and which are saturated or unsaturated linear or branched aliphatic, cycloaliphatic, aromatic or heterocyclic. They may also bear substituents, which do not materially interfere with the curing reaction.

Examples of epoxy resins suitable for use include those derived from mono- and/or polyhydric and/or polynuclear phenols, especially bisphenols and novolacs. They are diglycidylether of bisphenol A, diglycidylether of bisphenol F and polyglycidyl ethers of polyhydric phenol obtained from the reaction of phenol (or alkylphenols) and aldehydes such as formaldehyde.

Polyglycidyl ethers of alcohols, glycols or polyglycols, and polyglycidyl esters of polycarboxylic acids can be used as well.

An extensive enumeration of these compounds is to be found in the compendium "Epoxidverbindungen und Epoxidharze" by A. M. Paquin, Springer Verlag, Berlin, 1958, chapter IV, and in Lee & Neville, "Handbook of Epoxy Resins", 1967, chapter 2, pages 257-307.

It is also possible to use mixtures of two or more than two different epoxy compounds.

The epoxy compounds can be liquid in particular liquid bisphenols or liquid novolacs. Also semi-solid or solid resins, especially those of type 1, can be used. Some commercially available solid resins of type 1 are available from Huntsman under the trade names Araldite^{®} GT 7071 and GT 6071. In case of using semi-solid or solid resins a solvent is needed to dissolve the epoxy resin and to reduce the viscosity in such a way that the product can be sprayed, as it is the case in marine applications. Additionally also epoxy compounds derived from advancement reactions, for example the advancement of novolacs with bisphenol A could be used as well.

According to the invention preferred compositions are those, wherein compound a) is selected from diglycidylether of bisphenol A, diglycidylether of bisphenol F, polyglycidylether of polyhydric phenol or cresol novolacs, mono- or polyglycidylether of mono- or polyhydric cycloaliphatic alcohols, mono- or polyglycidylether of mono- or polyhydric aliphatic alcohols. Blends of epoxy resins with so-called reactive diluents, e.g. glycidyl ethers of:
mono- or polyhydric phenols, mono- or polyhydric aliphatic alcohols, mono- or polyhydric cycloaliphatic alcohols, can be used as well. Some suitable examples are: cresylglycidyl ether, p-tert.-butyl-phenylglycidyl ether, n-dodecyl-/n-tetradecylglycidyl ether, 1,4-butanedioldyglycidyl ether, 1,6-hexanediol-diglycidyl ether, trimethylolpropanetriglycidyl ether, polyglycidyl ether like polyoxypropylenediglycidyl ether, cyclohexane-dimethanoldiglycidyl ether, glycidylester of neodecanoic acid and of cyclohexanedicarboxylic acid.

If necessary, the viscosity of the epoxy resins can be further reduced by adding such reactive diluents and should only be used in reasonable amounts so that the diluents may not adversely affect the end-properties of the thermoset.

In a preferred embodiment of the invention blends of the epoxy compound a) with reactive diluents are used, by premixing the epoxy resin with at least one reactive diluent. Thus component a) is a mixture of an epoxy resin containing on average more than one epoxy group per molecule and at least one reactive diluent.

In another preferred embodiment of the invention, component a) is premixed with a cyclic carbonate. Thus component a) is a mixture of an epoxy resin containing on average more than one epoxy group per molecule and a cyclic carbonate. It has the function to reduce significantly the viscosity of the formulation and therefore the system needs less solvent to be spray applicable. This is compliant with the environmental legislation on VOC's, which increasingly becomes strict and affords for high solid applications (low -VOC paints). The said cyclic carbonates could be added at different weight ratios but shoud not adversely affect the cure speed and the end properties of the thermosets. The cyclic carbonates and the epoxy resin to be cured can simply be mixed together. A suitable ratio between epoxy resin and carbonate in weight percent is from 75:25 to 99:1, preferably from 80:20 to 99:1 and most preferably 85:15 to 99:1.

It is also possible to use mixtures of two or more than two different epoxy compounds being premixed with two or more than two different cyclic carbonates.

The aminic compounds b1), which are blended with the novolac resins b2) and cured with the epoxy resins a) according to this invention are very low viscous amines at ambient conditions.

Preferably the amine is selected from diethylenetriamine (DETA), 2-methyl-1,5-diaminopentane, 1,2-diaminopropane, 1,3-diaminopropane, 1,3-diaminopentane, dipropylenetriamine, cocos-alkyl amine, and 1,2-diaminocyclohexane (1,2-DACH).

In an especially preferred embodiment of this invention the amines are selected from diethylenetriamine, 2-methyl-1,5-diaminopentane, 1,3-diaminopentane, dipropylentriamine, cocos-alkyl amine, and 1,2- diaminocyclohexane.

Using mixtures from several of the above mentioned amines or the combination with other commonly used amines as curing agents like 2,2,4-trimethyl-1,6-diaminohexane, 2,4,4-trimethyl-1,6-diaminohexane or mixtures thereof (TMD); 3-aminomethyl-3,5,5-trimethylcyclohexylamine (or isophoronediamine (IPD)); m-xylylenediamine (MXDA), 1,2-diaminocyclohexane (1,2-DACH) and 1,3-Bis(aminomethyl)cyclohexane (1,3-BAC); 1,2-bis(aminomethyl)cyclohexane, bis aminomethyl-dicyclopentadiene (tricyclodecyldiamine (TCD)), diaminodicyclohexylmethane (PACM); mixed polycyclic amines (MPCA) (e.g. Ancamine 2168); dimethyldiaminodicyclohexylmethane (Laromin C260) etc., is possible as well as. However depending on the concentration and type of novolac used for the blend, said amines should be added only at a certain concentration in order to keep the final viscosity of the blend at 25°C below 150 000 mPa·s, preferably below 100 000 mPa·s, more preferably less than 50 000 mPa·s, and most preferably less than 25 000 mPa·s in order to be compliant with the environmental legislation on VOC's. However such blends could still be liquid for viscosities even higher than 150 000 mPa·s measured at 25°C.

A very preferred embodiment of this invention is the singly use of the amine DETA, or DETA in combination with a certain concentration of an amine selected from cocos-alkyl amine; a polyoxyalkyleneamine, e.g. jeffamine^{®} D-230; m-xylylenediamine (MXDA); 2,2,4-trimethyl-1,6-diaminohexane, 2,4,4-trimethyl-1,6-diaminohexane or mixtures thereof (TMD.); and cycloaliphatic amines like isophoronediamine (IPD), blended with a phenol-formaldhyde novolac due to the obtained outstanding corrosion resistance.

In a preferred embodiment of the invention the polymeric phenol novolac is a homopolymer resulting from the condensation of a phenolic compound of formula (I) with formaldehyde (paraformaldehyde) or a copolymer of different phenolic compounds of formula (I) with formaldehyde (paraformaldehyde): 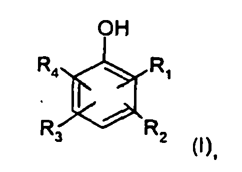 wherein in formula (I) R₁, R₂, R₃, R₄, independently of one another are H, branched or unbranched alkyl radicals containing 1 to 15 carbon atoms.

Preferred novolacs derived from compounds of formula (I) are those, wherein in formula (I) R₁, R₂, R₃, R₄ are either H (phenol), or alkylphenols, wherein, while the remaining radicals R₁ to R₄ are H, one or two of the radicals R₁ to R₄ are the radical -CH₃, or one of the radicals R₁ to R₄ is a tert-butyl radical, or one of the radicals R₁ to R₄ is a long-chain branched or unbranched alkyl radical containing 8 to 15 carbon atoms.

According to this invention under polymeric novolac being a copolymer of different phenolic compounds of formula (I) with formaldehyde is undestood, that the novolac results from using a mixture of at least two different phenolic compounds when synthesizing the novolac.

The novolac, preferably derived from a phenolic compound of formula (I), should be present in an amount of at least 46% by weight and at most of 62% by weight based on the total weight of the hardener blend in order to get a liquid hardener blend at 25°C.

In another preferred embodiment of the invention, the polymeric phenol novolac comprises unreacted free phenolic compounds, preferably compounds of formula (I) in an amount of no more than 10%, preferably less than 5% and most preferably less than 1% by weight, based on the total weight of the hardener blend b1) and b2).

The novolacs prepared are statistical compositions, with a well defined polydispersity index. A narrow distribution of the polymer with a polymer index lp ~ 1.0 leads to polymer solutions within lower viscosity ranges. Therefore, in order to reduce the viscosity of the final system as much as possible, a polydispersity index lp of around 1 is preferred. A good example of a commercially available phenol-formaldehyde novolac is Supraplast^{®} 3616 from Sod-West-Chemie GmbH, whose polydispersity index Mw/Mn lays around 1.39. The molecular weight of the phenolic novolac can be easily influenced on using a suitable excess of phenolic component(s) with respect to the amount of (para)formaldehyde.

An inventive blend of amine and novolac or hybrid hardener can for example be prepared by dissolving the novolac in the amine at approximately 90°C under flow of nitrogen and under stirring for approximately half to one hour. The novolac, preferably derived from phenol and formaldehyde, should be present in an amount of 46 to 62 % by weight, more preferably between 47 and 60 % by weight, most preferably between 48 and 58 % by weight based on the total weight of the hardener blend comprising components b1) and b2) in order to get a liquid hardener composition at ambient conditions.

Hybrid hardeners and epoxy compounds are preferably used in about equivalent amounts, i.e. based on active hydrogen's bound to amino nitrogen atoms and reactive epoxy groups. However, it is also possible to use the hybrid hardener or the glycidyl component in more or less than the equivalent amount. The amounts used depend on the desired final properties of the reaction product as known by the skilled persons in the art.

The inventive epoxy resin compositons can optionally further comprise inorganic and/or organic additives selected for example from flow control additives, antifoaming agents, anti-sag agents, pigments, reinforcing agents, fillers, elastomers, stabilizers, extenders, plasticizers, flame retardants, accelerators, colorants, fibrous substances, thixotropic agents, anti-corrosive pigments and solvents.

Accelerators in catalytic amounts for epoxy/amine reactions can be used in addition to the new amine/polyphenol hybrid hardeners. Suitable examples are for instance Mannich base type accelerators like 2,4,6-tris(dimethylaminomethyl)phenol and accelerator 2950 from Huntsman Advanced Materials, tertiary amines like benzyldimethylamine (BDMA), metal salts like hydroxides and nitrates most known those of group I and group II metals such as calcium, lithium etc. as described in EP 0 083 813 A1 and EP 0 471 988 A1, or acids like salicylic acid can be added as well. The amount of accelerator is from 0.1 to 10, preferably from 0.3 to 5, more preferably from 0.5 to 3 % per weight based on the total weight of amine/novolac/accelerator.

Preferred accelerators are selected from salicylic acid, benzyldimethylamine, calcium nitrate,
2,4,6-tris(dimethylaminomethyl)phenol.

As already mentioned, the present invention deals with new hardener blends based on amines and a novolac of type phenol-formaldehyde. It has surprisingly observed that by blending for instance diethylenediamine (DETA) with a very high concentration of novolac of almost 50 to 55 wt% novolac gives a liquid hybrid hardener, which can further be formulated with liquid epoxy without being a dispersion and which is surprisingly curable at very low temperature as low as 5°C and with quite short gelation times measured at 23°C/50% r.h. below 15 minutes depending on the concentration of phenol-formaldehyde novolac dissolved in the amine.

Furthermore extremely fast curing rates were observed for such systems that improves partially the resistance toward humidity and carbamation and resulting in a reduced stickiness and shorter dust free times almost at room temperature when compared to amine blends based on a concentration of conventional novolac of 25 wt% based on phenol-formaldehyde at the superior limit of the patent WO 99/29757.

As already mentioned, the present invention relates to rapid setting protective coatings. The combination of the inventive blends with epoxy resins, are useful, among other things, for marine application area, where many steel works on ships are exposed to salt, causing electrochemical corrosion and formation of rust. The anti-corrosive coating is generally applied to freshly sand-blasted steel and should be preferably cured and tacky-free after 24h at temperatures below 23°C. Such novel class of blend hardeners of amine / phenol-formaldehyde novolac compositions, for which the concentration of phenol novolac is above 45 wt% based on total hardener blend, offers improved cure properties and improved resistance to corrosion compared to neat amine/epoxy systems.

Further, if compared to hardeners like phenalkamines, which are as well suitable for low temperature cure, such hybrid systems are much more rapid with short full cure times, ensuring good corrosion resistance and some times good intercoat-adhesion especially seen in the case of blend hardener based on DETA.

Last but not least, the inventive hybrid hardeners are much less colored than phenalkamines which exhibiting shorter full cure times, however exhibiting longer dust free times, which could be at low temperatures, of e.g. 5°C, problematic for certain applications.

The inventive hybrid hardeners can be used mainly for marine coatings for below water or above water area, ballast water tanks etc. and also other application fields where rapid manufacture time is required. Further possible applications include refurbishment of existing tanks, pipelines etc., which should return to service in a short time. In practice, this means that the curing should be achieved within a couple of hours, typically of 2 to 5 hours, even at low temperatures, close to 5°C. For instance, for pipe lining application only a short full cure times is of importance, however dust free times are of minor importance.

Furthermore, such new hybrid hardeners could, as well, be useful for applications in which corrosion or chemical protection is required, such as tank lining. The inventive blends exhibits as well good chemical resistance, especially at high concentrations of phenol-formaldehyde novolac above 50 wt% based for instance on the amine blend DETA/supraplast 3616.

However, the quantity of phenol-formaldehyde resin depends principally on the type of amine or mixture of amines as well on the type of phenolic resin used to prepare the hybrid hardener and on the targeted viscosity/properties for a given application. To that respect, the viscosity of the hybrid hardeners should be as already mentioned before preferably lower than 25 000 mPa·s at 25°C. Only in the case of high hardener blend viscosities it is desirable to add a solvent to the hardener blend in order to reduce the viscosity of the final formulation to make the said formulation spray or brush applicable. Standard solvents, like xylene/butanol mixtures or pure alcohols like methoxypropanol are commonly used.

The inventive curable compositions can be cured at a temperature within the range of from -40°C, preferably from about -10°C, to about 55°C for a sufficient time to fully cure the epoxy resin.

For standard ambient cure applications, the composition is preferably cured at a temperature from about -10°C to about 50°C, more preferably from -5°C to about 45°C.

A further inventive object is a cured material, obtained from curing an inventive composition.

The epoxy composition and the further cured material described herein can be used for coating, adhesive, flooring material, casting, tooling or encapsulating, to name a few applications.

The most preferred use of the cured materials disclosed in the present invention is as protective coatings and adhesives.

The epoxy compositions have particularly good applicability for coatings, especially when combined with pigments. The epoxy compositions using the novel hybrid hardeners described above can for example advantageously be combined with an anti-corrosive pigment like zinc phosphate or zinc powder to produce paint formulations having high corrosion resistance for marine and heavy duty applications. Furthermore the compositions can also include pigments like iron oxide and titanium dioxide and a filler like barium sulfate, to give protective coatings for tanks and pipes. The resulting formulations can be applied on at least one surface of the substrate to be coated in conventional manner by spraying, roller coating, brushing etc. or with special equipments like a twin-feed spray equipment and the like, depending on the gel time of the system.

A further object of the instant invention is the use of a hardener blend b) as curing agent, whereby said hardener is a liquid hardener blend with a viscosity of less than 150 000 mPa·s at 25°C comprising
b1) an aminic compound selected from a single or mixture of different aliphatic, cycloaliphatic, araliphatic amine whereby the said aminic compound contains, on average per molecule, at least two reactive hydrogen atoms bound to nitrogen atoms, and
b2) a polymeric phenol novolac, and wherein the phenol novolac is used in an amount of from 46% to 62% by weight, based on the total weight of the hardener blend b1) and b2).

### Examples

### A) Cure properties of hybrid hardeners based on blends of amine and novolac

The following hybrid hardeners have been prepared by dissolving the novolac resin Supraplast 3616 in different amines or amine mixtures at the temperature of 80-90°C; the characteristics of the hybrid hardeners are given below in table 1.

**Table 1.I: Hybrid hardener compositions with different ratios of amine and novolac supraplast 3616**

| Blend | A | B | C | D | E | F | G | H |
|---|---|---|---|---|---|---|---|---|
| Diethylentriamine ¹⁾ | 50.0 | 49.0 | 46.0 | --- | --- | --- | --- | --- |
| 1,2-diamino propane ²⁾ | --- | --- | --- | 50.0 | 45.0 | --- | --- | --- |
| 1,3-diamino propane ³⁾ | --- | --- | --- | --- | --- | 50.0 | 45.0 | 40.0 |
| Novolac Supraplast ⁴⁾ | 50.0 | 51.0 | 54.0 | 50.0 | 55.0 | 50.0 | 55.0 | 60.0 |
| Viscosity hardener ⁵⁾ | 4970 | 8000 | 21400 | 800 | 4500 | 570 | 4100 | 28200 |

| | | | | | | | | |
|---|---|---|---|---|---|---|---|---|
| ¹⁾ purchased from Fluka in wt%; ²⁾ purchased from Aldrich in wt%, ³⁾ purchased from Aldrich in wt%; ⁴⁾ Novolac resin Supraplast 3616 in wt% purchased from Süd-West-Chemie GmbH Neu-Ulm with following characteristics: Mn=341, Mw=474, Ip=1.39 determined by using GPC-RI: Columns: 3 x Mixed-C; eluant: THF at 1ml/min, Polystyrene calibration and it contains less than 0.8% free phenol; ⁵⁾ Viscosity of amine/novolac blend was determined at 25°C using a CAP 2000 viscosimeter with cone 6 (ISO 3219). | | | | | | | | |

**Table 1.II: Hybrid hardener compositions with different ratios of amine and supraplast 3616**

| Blend | I | J | K | L | M |
|---|---|---|---|---|---|
| Dytek A (2-methyl-1,5-diaminopentane) ¹⁾ | 50.0 | -- | --- | --- | --- |
| cocos alkylamine (Genamin® CC100 D) | --- | 54.0 | --- | --- | --- |
| Dytek EP diamine ²⁾ (1,3-diaminopentane) ²⁾ | --- | --- | 50.0 | --- | --- |
| Triethylentetramine ³⁾ | --- | --- | --- | 54.0 | --- |
| Tetraethylenpentamine ⁴⁾ | --- | ---- | --- | --- | 50.0 |
| Novolac Supraplast 3616 | 50.0 | 46.0 | 50.0 | 46.0 | 50.0 |
| Viscosity hardener at 25°C ⁵⁾ | 10650 | 18 800 | 4 970 | 35 000 | >150000 but liquid *) |

| | | | | | |
|---|---|---|---|---|---|
| *) Viscosity of the hardener measured at 25°C is above the upper limit of the viscosimeter using a CAP 2000 viscosimeter with cone 6 (ISO 3219) (maximum of measureable value at 50 rpm). ¹⁾ DYTEK® A was purchased from INVISTA in wt%, today ²⁾ purchased from Aldrich in wt%, ³⁾ from Huntsman in wt%, ⁴⁾ purchased from Fluka in wt%; ⁵⁾ Viscosity of amine/novolac blend was determined at 25°C using a CAP 2000 viscosimeter with cone 6. | | | | | |

**Table 1.III: Hybrid hardener compositions with different ratios of amine and supraplast 3616**

| Blend | N | O | P |
|---|---|---|---|
| Pentaethylenhexamine ⁵⁾ | 50.0 | --- | --- |
| Dipropylenetriamine ⁶⁾ | --- | 50.0 | --- |
| TMD ⁷⁾ | --- | --- | 54.0 |
| Novolac Supraplast 3616 | 50.0 | 50.0 | 46.0 |
| Viscosity hardener at 25°C ⁸⁾ | > 150 000 liquid | 23 500 | > 150 000 liquid |

| | | | |
|---|---|---|---|
| ⁵⁾ purchased from Fluka; ^{6) 7)} respectively under trade name Aradur 26 and Aradur 21 (40% 1,6-Diamino-2,2,4-trimethylhexane and 60% 1,6-Diamino-2,4,4-trimethylhexane) from Huntsman in wt%; ⁸⁾ Viscosity of amine/novolac blend was determined at 25°C using a CAP 2000 viscosimeter with cone 6. *) Viscosity of the hardener measured at 25°C is above the upper limit of the viscosimeter using a CAP 2000 viscosimeter with cone 6 (ISO 3219) (maximum of measureable value at 50 rpm). | | | |

The table 2 below gives the cure properties of an inventive blend hardener based for instance on a mixture of DETA/supraplast 3616 with almost 50 wt% of novolac supraplast 3616, which was compared with those of the neat amine DETA (unmodified amine DETA) and with a blend corresponding to the upper limit of the patent application WO 99/29757 with 25 wt% of novolac supraplast 3616 for epoxy system cured at different temperatures of 0°C, 5°C and 23°C.

**Table 2: Cure properties of the inventive hardener blends based on DETA compared to neat amine DETA (= Comp 1) and blend hardener DETA/supraplast 3616 [75/25] (=Comp 2) of WO 99/29757**

| Formulation | 1 | 2 | 3 | Comp.1 | Comp. 2 |
|---|---|---|---|---|---|
| Epoxy resin ¹⁾ | 81.88 | 81.57 | 80.58 | 90.04 | 87.15 |
| amine/novolac blend A) ²⁾ | 18.12 | --- | --- | --- | --- |
| amine/novolac blend B) ²⁾ | --- | 18.43 | --- | --- | --- |
| amine/novolac blend C) ²⁾ | --- | --- | 19.42 | --- | --- |
| DETA ²⁾ | --- | --- | --- | 9.96 | --- |
| DETA/supraplast 3616 [75/25] ²⁾ | --- | --- | --- | --- | 12.85 |
| Viscosity of formulation at 25°C ³⁾ | 10000 | 10 800 | 13 600 | 1 250 | 2 430 |
| Full cure at 5°C (hours) ⁴⁾ | 4.5 | 4.5 | 4 | 10 | 7 |
| Dust free at 5°C (hours) ⁵⁾ | > 24 | > 24 | > 24 | > 24 | > 24 |
| Full cure at 23°C (hours)⁴⁾ | 1 | 1 | 1 | 4 | 1.5 |
| Dust free at 23°C (hours) ⁵⁾ | 3.5 | 3.5 | 2.5 | 18 | 6 |
| Aspect at 23°C /50% r.h. | smooth film practically clear, very little turbid | smooth film practically clear, very little turbid | smooth film practically clear, very little turbid | very turbid film with structure | smooth and hazy film |

| | | | | | |
|---|---|---|---|---|---|
| Coating thickness measured on glass is between 250-300 µm. ¹⁾ GY250 with Epoxy equivalent weight of EEW 186 in wt%; ²⁾ in wt%; ³⁾ Viscosity of the formulation was determined at 25°C using a CAP 2000 viscosimeter (ISO 3219) with cone 6 for formulations 1, 2, 3 and comparatives 1 and 2; ^{4) 5)} the cure times were measured on Landolt equipment using glass sheets coated with the above formulations. To determine the full cure, a needle is continuously moving forward on the coated glass during exactly 24h; the full cure is determined by measuring the distance/time where the needle, penetrating the film, comes out from the film. To determine dust free time, sand is continuously added to the coating surface; the dust free time is measured by removing the sand from the coating surface and measuring the distance/time where sand sticks on the coating surface. | | | | | |

The results for the inventive compositions, if compared with the two comparative examples, show much better cure times especially the dust free time, which was almost reduced to 4 h measured at 23°C for blend C. The amine/novolac blend at such high concentration of novolac is considered to be a hybrid hardener that enables rapid cure at low temperature without use of any additional heat. However, the viscosity of the end formulation at such concentration of novolac becomes high.

Additional examples of cure behavior of hardener blends are given in table 3. All these hardeners have the particularity to be fast and exhibit less exudation than the corresponding neat amines.

**Table 3: Cure properties of others inventive blend hardeners compared their corresponding neat amines.**

| Formulation | 4 | 5 | 6 | Comp 3 | Comp 4 | Comp 5 |
|---|---|---|---|---|---|---|
| Epoxy resin | 76.22 | 78.48 | 80.49 | 86.07 | 87.94 | 88.43 |
| amine/novolac blend ^{1) 2)} | 23.78 | --- | --- | -- | --- | --- |
| amine/novolac blend K) ³⁾ | --- | 21.52 | --- | --- | --- | --- |
| amine/novolac blend L) ⁴⁾ | --- | --- | 19.51 | --- | --- | --- |
| amine Dytek A) ⁶⁾ | --- | --- | --- | 13.93 | --- | --- |
| amine Dytek EP)⁷⁾ | --- | --- | --- | -- | 12.06 | --- |
| Triethylentetramine (TETA) ⁸⁾ | --- | --- | --- | --- | --- | 11.57 |
| Dipropylenetriamine ⁹⁾ | --- | --- | --- | --- | --- | --- |
| Viscosity of formulation / 25°C | 11 500 | 8 700 | 20 000 | 550 | 550 | 1 900 |
| Full cure at 5°C (hours) | 2.5 | 4.5 | 4.5 | 14 | 19.5 | 15 |
| Dust free at 5°C (hours) | > 24 | > 24 | > 24 | >24 | >24 | >24 |
| Full cure at 23°C (hours) | 1 | 2.5 | 1.5 | 3 | 6 | 7 |
| Dust free at 23°C (hours) | 4 | 2.5 | 7 | > 24 | > 24 | > 24 |
| Aspect of the film after 24h cure at 23°C /50% r.h. | clear smooth | clear smooth | clear smooth | very turbid | very turbid | very turbid |

| | | | | | | |
|---|---|---|---|---|---|---|
| ¹⁾GY250 with Epoxy equivalent weight of EEW 186 in wt%; ^{2) 3) 4) 5) 6) 7) 8) 9)} in wt%, ¹⁰⁾ viscosity measured with CAP 2000 cone 6 at 25°C | | | | | | |

The table 4 gives the viscosities of blends based on mixtures of amines and supraplast 3616 and in table 5 their cure properties compared to neat amines mixtures. It seems that using a combination of DETA with an adequate amine, it is possible to reduce even more the dust free time at 5°C.

**Table 4: blend hardener compositions based on different amine mixtures**

| Blend | Q | R | S | T | U | V | W | X |
|---|---|---|---|---|---|---|---|---|
| DETA ¹⁾ | 40.0 | 45.0 | 45.0 | 45.0 | 80.0 | 90.0 | 90.0 | 90.0 |
| coco alkylamine ²⁾ (Genamin CC100 D) | 10.0 | --- | --- | --- | 20.0 | --- | --- | --- |
| TMD ³⁾ | --- | 5.0 | --- | --- | --- | 10.0 | --- | --- |
| MXDA ⁴⁾ | --- | --- | 5.0 | --- | --- | --- | 10.0 | --- |
| Jeffamine D-230 ⁵⁾ | --- | --- | --- | 5.0 | --- | --- | --- | 10.0 |
| Novolac ⁶⁾ Supraplast 3616 ⁶⁾ | 50.0 | 50 | 50 | 50 | 0.0 | 0.0 | 0.0 | 0.0 |
| Viscosity of hardener at 25°C ⁷⁾ | <1500 thixotropic turbide | 8 000 | 7 500 | 8 300 | < 10 | < 10 | < 10 | < 10 |

| | | | | | | | | |
|---|---|---|---|---|---|---|---|---|
| ^{1) 2) 3) 4) 5) 6)} in wt%, ⁷⁾ viscosity measured at 25°C with CAP 2000 cone 6 for viscosities above 1000 mPa·s and with CAP 2000 cone 1 for viscosities less than 10 mPa·s | | | | | | | | |

**Table 5: blend cure properties of other inventive blend hardeners compared to their corresponding neat amine mixtures**

| Formulation | 7 | 8 | 9 | Comp 6 | Comp 7 | Comp 8 |
|---|---|---|---|---|---|---|
| Epoxy resin ¹⁾ | 81.11 | 81.26 | 80.83 | 89.57 | 89.66 | 89.40 |
| amine/novolac blend R) ²⁾ | 18.89 | --- | --- | --- | --- | --- |
| amine/novolac blend S) ³⁾ | --- | 18.74 | --- | --- | --- | --- |
| amine/novolac blend T) ⁴⁾ | --- | -- | 19.17 | --- | --- | --- |
| DETA/TMD [90/10]) ⁵⁾ | --- | --- | --- | 10.43 | --- | --- |
| DETA/MXDA [90/10] ⁶⁾ | --- | --- | --- | --- | 10.34 | --- |
| DETA/Jeffamine D-230 [90/10] ⁷⁾ | --- | --- | --- | --- | --- | 10.60 |
| Viscosity of formulation at 25°C ⁸⁾ | 10 800 | 10 400 | 10 500 | 1 100 | 1 300 | 1 150 |
| Full cure at 5°C (hours) | 4 | 4 | 4 | 12 | 10 | 10.5 |
| Dust free at 5°C (hours) | 7 | 15 | 17 | >24 | 19 | >24h |
| Full cure at 23°C (hours) | 1.5 | 1 | 1 | 4.5 | 4 | 4.5 |
| Dust free at 23°C (hours) | 7 | 6.5 | 4 | 8.5 | 10 | 12 |
| Aspect of the film after 24h cure at 23°C /50%rh | Clear smooth | Clear smooth | Clear smooth | hazy film | hazy film | hazy film |

| | | | | | | |
|---|---|---|---|---|---|---|
| ¹⁾ GY250 with Epoxy equivalent weight of EEW 186 in wt%; ^{2) 3) 4) 5) 6) 7)} in wt%, ⁸⁾ viscosity measured at 25°C with CAP 2000 cone 6 | | | | | | |

### Chemical resistance of hybrid hardener blends combined with epoxy resin

The chemical resistance was tested on coatings applied approximately 500 microns thick on sand-blasted steel panels Sa 2^{1/2}, which were cured for 10 days at 23°C and 50% rh.

The chemical resistance of the inventive hybrid hardener blend in combination with basic epoxy resin GY 250 (EEW 186) (in table 8) was compared to those of unmodified amine, for instance here in the case of the pure diethylenediamine (table 6) and also to those of amine/novolac resin mixture being at the superior limit of the compositions ratio amine/novolac resin 75/25 claimed in the patent application WO 99/29757 (table 7). The hardener DETA do not show at all resistance toward aqueous solution of acetic acid 5 and 10 wt%, the films are destroyed in less than 3 days once in contact with such aggressive chemicals.

**Table 6:**

| Chemical resistance of the neat system DETA/Araldite GY250 (unmodified system) | | | | | | | | | | | | | | | |
|---|---|---|---|---|---|---|---|---|---|---|---|---|---|---|---|
| Epoxid / Hardener | Araldite GY250: 90.04 parts / DETA:: : 9.96 parts | | | | | | | | | | | | | | |
| Duration (d, w, m)¹⁾ | 3d | 1w | 2w | 1m | 2m | 3m | 4m | 5m | 6m | 7m | 8m | 9m | 10 | 11 | 12 |
| HCl 20 wt% | ■ | ■ | ■ | ■ | ■ | ■ | ■ | ■ | ■ | ■ | ■ | ■ | ■ | ■ | ■ |
| HCl conc | ■ | ■ | ■ | ■ | ■ | ■ | ■ | ■ | ■ | ■ | 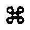 | 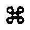 | 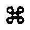 | 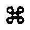 | 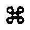 |
| H₂SO₄ 50 wt% | ■ | ■ | ■ | ■ | ■ | ■ | ■ | ■ | ■ | ■ | ■ | ■ | ■ | ■ | ■ |
| NH₄OH conc | ■ | ■ | ■ | ■ | ■ | ■ | ■ | ■ | ■ | ■ | ■ | ■ | ■ | ■ | ■ |
| C₆H₄(CH₃)₂ | ■ | ■ | ■ | ■ | ■ | ■ | ■ | ■ | ■ | ■ | ■ | ■ | ■ | ■ | ■ |
| C₂H₅OH 95 wt% | ■ | ■ | ■ | ■ | ■ | ■ | ■ | ■ | ■ | ■ | ■ | ■ | ■ | ■ | ■ |
| C₂H₅OH 50 wt% | ■ | ■ | ■ | ■ | ■ | ■ | ■ | ■ | ■ | ■ | ■ | ■ | ■ | ■ | ■ |
| CH₃COOH 10 wt% | 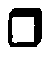 | 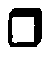 | 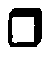 | 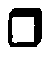 | 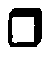 | 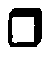 | 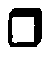 | 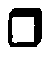 | 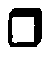 | 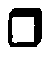 | 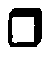 | 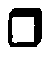 | 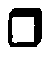 | 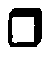 | 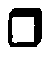 |
| CH₃COOH 5 wt% | 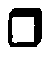 | 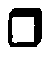 | 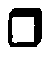 | 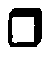 | 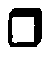 | 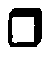 | 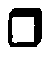 | 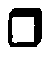 | 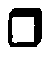 | 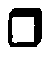 | 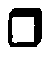 | 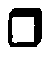 | 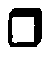 | 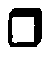 | 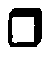 |

| | | | | | | | | | | | | | | | |
|---|---|---|---|---|---|---|---|---|---|---|---|---|---|---|---|
| For tables 6 to 8: ¹⁾ d, w, m = days, weeks, months; coating surface is either ■ = resistant to, 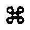 = attacked by, or 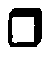 destroyed by the chemical | | | | | | | | | | | | | | | |

The chemical resistance of the coatings made with the hardener corresponding to the upper limit of the patent application WO 99/29757 DETA/supraplast 3616 75/25 show good chemical resistance toward acetic acid (5%), some less resistance toward acetic acid (10%). Finally the blend mixture comprising almost 50 wt% DETA with 50 wt% supraplast 3616
exhibits slightly improved chemical resistance toward chemical like acetic acid (10%) compared to the hardener blend DETA/supraplast 3616 75/25 and for exposure times between 2 weeks and 4 months.

Furthermore we have also tested other very aggressive chemicals like methanol and different types of gazolines described in Tables 8 and 9. It is noteworthy to mention that methanol is one of the most aggressive chemicals for epoxy coatings that exists. For composition ratios of 75/25 and 50/50 of DETA/novolac resin blends, outstanding chemical resistance was observed in both cases, showing a resistance of almost 8 months. Moreover, an unexpected good chemical resistance toward gasoline DIN 51604 A, DIN 51604 B and DIN 51604 C was observed as well, for both blends (compositions ratios 75/25 and 50/50).

It is noteworthy that it was unexpected that at such high concentration of novolac, the hardener blend remains liquid and that the cured compositions exhibit such high chemical resistance toward such aggressive chemicals as mentioned above.

**Table 7:**

| Chemical resistance of the hardener DETA/ supraplast 3616 [75/25] in combination with araldite GY250 | | | | | | | | | | | | | | | |
|---|---|---|---|---|---|---|---|---|---|---|---|---|---|---|---|
| Epoxid / Hardener | Araldite GY250: 87.15 parts / DETA/supraplast 3616 [75/25]: 12.85 parts | | | | | | | | | | | | | | |
| Duration(d, w, m)¹⁾ | 3d | tw | 2w | 1m | 2m | 3m | 4m | 5m | 6m | 7m | 8m | 9m | 10 | 11 | 12 |
| HCl 20 wt% | ■ | ■ | ■ | ■ | ■ | ■ | ■ | ■ | ■ | ■ | ■ | ■ | ■ | ■ | ■ |
| HCl conc | ■ | ■ | ■ | ■ | ■ | ■ | ■ | ■ | ■ | ■ | ■ | ■ | ■ | ■ | ■ |
| H₂SO4 50 wt% | ■ | ■ | ■ | ■ | ■ | ■ | ■ | ■ | ■ | ■ | ■ | ■ | ■ | ■ | ■ |
| NH₄OH conc | ■ | ■ | ■ | ■ | ■ | ■ | ■ | ■ | ■ | ■ | ■ | ■ | ■ | ■ | ■ |
| C₆H₄(CH₃)₂ | ■ | ■ | ■ | ■ | ■ | ■ | ■ | ■ | ■ | ■ | ■ | ■ | ■ | ■ | ■ |
| C₂H₅OH 95 wt% | ■ | ■ | ■ | ■ | ■ | ■ | ■ | ■ | ■ | ■ | ■ | ■ | ■ | ■ | ■ |
| C₂H₅OH 50 wt% | ■ | ■ | ■ | ■ | ■ | ■ | ■ | ■ | ■ | ■ | ■ | ■ | ■ | ■ | ■ |
| CH₃COOH 10 wt% | ■ | ■ | 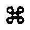 | 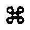 | 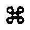 | 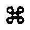 | 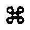 | 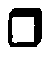 | 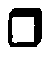 | 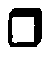 | 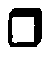 | 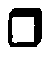 | 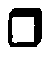 | 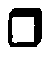 | 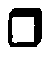 |
| CH₃COOH 5 wt% | ■ | ■ | ■ | ■ | ■ | ■ | ■ | ■ | ■ | ■ | ■ | ■ | ■ | ■ | ■ |

**Table 8:**

| Chemical resistance of the system DETA/supraplast 3616 [50/50] in combination with Araldite GY250 | | | | | | | | | | | | | | | |
|---|---|---|---|---|---|---|---|---|---|---|---|---|---|---|---|
| Epoxid / Hardener | Araldite GY250: 81.88 parts / DETA/supraplast 3616 [50/50]: 18.12 parts | | | | | | | | | | | | | | |
| Duration (d, w, m) ¹⁾ | 3 d | 1 w | 2 w | 1 m | 2m | 3m | 4m | 5m | 6 m | 7m | 8m | 9m | 10 | 11 | 12 |
| HCl 20 wt% | ■ | ■ | ■ | ■ | ■ | ■ | ■ | ■ | ■ | ■ | ■ | ■ | ■ | ■ | ■ |
| HCl conc | ■ | ■ | ■ | ■ | ■ | ■ | ■ | ■ | ■ | ■ | ■ | ■ | ■ | ■ | ■ |
| H₂SO4 50 wt% | ■ | ■ | ■ | ■ | ■ | ■ | ■ | ■ | ■ | ■ | ■ | ■ | ■ | ■ | ■ |
| NH₄OH conc | ■ | ■ | ■ | ■ | ■ | ■ | ■ | ■ | ■ | ■ | ■ | ■ | ■ | ■ | ■ |
| C₆H₄(CH₃)₂ | ■ | ■ | ■ | ■ | ■ | ■ | ■ | ■ | ■ | ■ | ■ | ■ | ■ | ■ | ■ |
| C₂H₅OH 95 wt% | ■ | ■ | ■ | ■ | ■ | ■ | ■ | ■ | ■ | ■ | ■ | ■ | ■ | ■ | ■ |
| C₂H₅OH 50 w% | ■ | ■ | ■ | ■ | ■ | ■ | ■ | ■ | ■ | ■ | ■ | ■ | ■ | ■ | ■ |
| CH₃COOH 10 wt% | ■ | ■ | ■ | ■ | ■ | ■ | ■ | 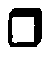 | 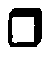 | 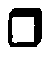 | 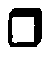 | 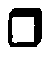 | 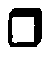 | 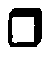 | 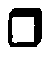 |
| CH₃COOH 5 wt% | ■ | ■ | ■ | ■ | ■ | ■ | ■ | ■ | ■ | ■ | ■ | ■ | ■ | ■ | ■ |

**Table 9:**

| Chemical resistance of the hardener DETA/ supraplast 3616 [75/25] in combination with Araldite GY250 | | | | | | | | | | | | | | | |
|---|---|---|---|---|---|---|---|---|---|---|---|---|---|---|---|
| Epoxid / Hardener | Araldite GY250: 87.15 parts / DETA/supraplast 3616 [75/25]: 12.85 parts | | | | | | | | | | | | | | |
| Duration (d, w, m) ¹⁾ | 3 d | 1w | 2 w | 1m | 2 m | 3m | 4m | 5 m | 6m | 7m | 8 m | 9m | 10 | 11 | 12 |
| Skydrol 100% | ■ | ■ | ■ | ■ | ■ | ■ | ■ | ■ | ■ | ■ | ■ | | | | |
| Gazoline 95% lead | ■ | ■ | ■ | ■ | ■ | ■ | ■ | ■ | ■ | ■ | ■ | | | | |
| Methanol | ■ | ■ | ■ | ■ | ■ | ■ | ■ | ■ | ■ | ■ | ■ | | | | |
| Crude oil | ■ | ■ | ■ | ■ | ■ | ■ | ■ | ■ | ■ | ■ | ■ | | | | |
| DIN 51604 A (*) | ■ | ■ | ■ | ■ | ■ | ■ | ■ | ■ | ■ | ■ | ■ | | | | |
| DIN 51604 B (**) | ■ | ■ | ■ | ■ | ■ | ■ | ■ | ■ | ■ | ■ | ■ | | | | |
| DIN 51604 C (***) | ■ | ■ | ■ | ■ | ■ | ■ | ■ | ■ | ■ | ■ | ■ | | | | |

| | | | | | | | | | | | | | | | |
|---|---|---|---|---|---|---|---|---|---|---|---|---|---|---|---|
| (*) Gasoline DIN 51604-A has following composition: 50 vol% toluol, 30 vol% isooctane 15 vol% diisobutylene and 5 vol% ethanol (**) Gasoline DIN 51604-B has following composition: 84.5 vol% Gasoline DIN 51604-A, 15 vol % methanol and 0.5 vol% water (***) Gasoline DIN 51604-C has following composition: 40 vol% Gasoline DIN 51604-A, 58 vol% methanol and 2 vol% water | | | | | | | | | | | | | | | |

**Table 10:**

| Chemical resistance of the system DETA/supraplast 3616 [50/50] in combination with Araldite GY250 | | | | | | | | | | | | | | | |
|---|---|---|---|---|---|---|---|---|---|---|---|---|---|---|---|
| Epoxid / Hardener | Araldite GY250: 81.88 parts / DETA/supraplast 3616 [50/50]: 18.12 parts | | | | | | | | | | | | | | |
| Duration (d, w, m) ¹⁾ | 3 d | 1 w | 2 w | 1m | 2m | 3m | 4m | 5 m | 6m | 7 m | 8m | 9 m | 10 | 11 | 12 |
| Skydrol 100% | ■ | ■ | ■ | ■ | ■ | ■ | ■ | ■ | ■ | ■ | ■ | | | | |
| Gazoline 95% lead | ■ | ■ | ■ | ■ | ■ | ■ | ■ | ■ | ■ | ■ | ■ | | | | |
| Methanol | ■ | ■ | ■ | ■ | ■ | ■ | ■ | ■ | ■ | ■ | ■ | | | | |
| Crude oil | ■ | ■ | ■ | ■ | ■ | ■ | ■ | ■ | ■ | ■ | ■ | | | | |
| DIN 51604 A | ■ | ■ | ■ | ■ | ■ | ■ | ■ | ■ | ■ | ■ | ■ | | | | |
| DIN51604B | ■ | ■ | ■ | ■ | ■ | ■ | ■ | ■ | ■ | ■ | ■ | | | | |
| DIN 51604 C | ■ | ■ | ■ | ■ | ■ | ■ | ■ | ■ | ■ | ■ | ■ | | | | |

## Claims

1. A curable composition comprising:
a) an epoxy resin containing on average more than one epoxy group per molecule,
b) as curing agent a hybrid hardener, whereby said hardener is a liquid hardener blend with a viscosity of less than 150 000 mPa·s at 25°C comprising
b1) an aminic compound selected from aliphatic, cycloaliphatie, and araliphatic amines, whereby said aminic compound contains, on average per molecule, at least two reactive hydrogen atoms bound to nitrogen atoms, and
b2) a polymeric phenol novolac, and wherein said novolac is used in an amount of from 46 % to 62 % by weight, based on the total weight of the hardener blend b1) and b2).

2. A composition according to claim 1, wherein the polymeric phenol novolac is used in an amount of from 47% to 60% by weight, based on the total weight of the hardener blend b1) and b2).

3. A composition according to any one of claims 1 and 2, wherein the polymeric phenol novolac is a homopolymer resulting from the condensation of a phenolic compound of formula (I) with formaldehyde (paraformaldehyde) or a copolymer of different phenolic compounds of formula (I) with formaldehyde (paraformaldehyde): 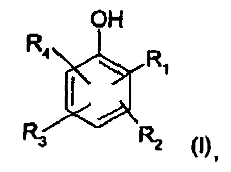 wherein in formula (I) R₁. R₂, R₃, R₄, independently of one another are H, branched or unbranched alkyl radicals containing 1 to 15 carbon atoms.

4. A composition according to at least one of the preceeding claims, wherein the polymeric phenol novolac comprises unreacted free phenolic compounds, preferably compounds of formula (I), in an amount of no more than 10%, preferably less than 5% and most preferably less than 1% by weight, based on the total weight of the hardener blend b1) and b2).

5. A composition according to at least one of the preceeding claims, wherein as component b1) Is used an amine selected from diethytenetriamine, 2-methyl-1,5-diaminopentane, 1,3-diaminopentane, dipropylentriamine, cocos-alkyl amine, and 1,2-diaminocyclohexane.

6. A composition according to at least one of the preceeding claims, wherein component a) is selected from diglycidylether of bisphenol A, diglycidylether of bisphenol F, polyglycidylether of polyhydric phenol or cresol novolacs, mono- or polyglycidylether of mono- or polyhydnc cycloallphatic alcohols, mono- or polyglycidylether of mono- or polyhydric aliphatic alcohols.

7. A composition according to at least one of the preceeding claims, wherein component a) is a mixture of an epoxy resin containing on average more than one epoxy group per molecule and at least one reactive diluent.

8. A composition according to at least one of the preceeding claims, wherein the component a) is a mixture of an epoxy resin containing on average more than one epoxy group per molecule and a cyclic carbonate.

9. A composition according to claim 8, wherein the cyclic carbonate is selected from ethylene carbonate, 1,2-propytene carbonate and 1,2-butylenecarbonate.

10. A composition according to at least one of the preceeding claims, which in addition comprises inorganic and/or organic additives selected from flow control additives, antifoaming agents, anti-sag agents, pigments, reinforcing agents, fillers, elastomers, stabilizers, extenders, plasticizers, flame retardants, accelerators, colorants, fibrous substances, thixotropic agents, anti-corrosive pigments and solvents.

11. A composition according to claim 10, wherein the accelerator is selected from salicylic acid, benryldimethylamine, calcium nitrate, 2,4,6-tris(dimethylaminomethyl)phenol.

12. A cured material, obtained from curing a composition according to at least one of the preceeding claims.

13. Use of a composition according to at least one of the preceeding claims for providing protective coatings and adhesives.

14. Use of a hardener blend b) as curing agent, whereby said hardener is a liquid hardener blend with a viscosity of less than 150 000 mPa·s at 25°C comprising
b1) an aminic compound selected from a single or mixture of different aliphatic, cycloaliphatic, araliphatic amine whereby the said aminic compound contains, on average per molecule, at least two reactive hydrogen atoms bound to nitrogen atoms, and
b2) a polymeric phenol novolac, and wherein the phenol novolac is used in an amount of from 46% to 62% by weight, based on the total weight of the hardener blend b1) and b2.

## Patentansprüche

1. Härtbare Zusammensetzung, umfassend:
a) ein Epoxidharz, das im Durchschnitt mehr als eine Epoxidgruppe pro Molekül enthält;
b) als Härtungsmittel einen Hybridhärter, wobei der Härter eine flüssige Härtermischung mit einer Viskosität von weniger als 150 000 mPa·s bei 25 °C ist, die Folgendes umfasst:
b1) eine Aminverbindung, die aus aliphatischen, cycloaliphatischen und araliphatischen Aminen ausgewählt ist, wobei die besagte Aminverbindung im Durchschnitt pro Molekül wenigstens zwei an Stickstoffatome gebundene reaktive Wasserstoffatome enthält; und
b2) einen polymeren Phenolnovolak, und worin der besagte Novolak in einer Menge von 46 bis 62 Gew.-% verwendet wird, bezogen auf das Gesamtgewicht der Härtermischung b1) und b2).

2. Zusammensetzung gemäss Anspruch 1, wobei der polymere Phenolnovolak in einer Menge von 47 bis 60 Gew.-%, bezogen auf das Gesamtgewicht der Härtermischung b1) und b2), verwendet wird.

3. Zusammensetzung gemäss irgend einem der Ansprüche 1 und 2, worin der polymere Phenolnovolak ein Homopolymer ist, das aus der Kondensation einer phenolischen Verbindung der Formel (I) mit Formaldehyd (Paraformaldehyd) resultiert, oder ein Copolymer verschiedener phenolischer Verbindungen der Formel (I) mit Formaldehyd (Paraformaldehyd) ist: 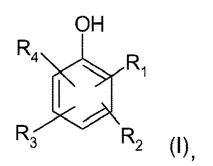 wobei in Formel (I) R₁, R₂, R₃ und R₄ unabhängig voneinander H, verzweigte oder unverzweigte Alkylreste mit 1 bis 15 Kohlenstoffatomen sind.

4. Eine Zusammensetzung gemäss wenigstens einem der vorstehenden Ansprüche, worin der polymere Phenolnovolak nicht umgesetzte freie phenolische Verbindungen, vorzugsweise Verbindungen der Formel (I), in einer Menge von nicht mehr als 10%, vorzugsweise weniger als 5% und am meisten bevorzugt weniger als 1 Gew.-%, bezogen auf das Gesamtgewicht der Härtermischung b1) und b2), umfasst.

5. Eine Zusammensetzung gemäss wenigstens einem der vorstehenden Ansprüche, worin als Komponente b1) ein Amin verwendet wird, das aus Diethylentriamin, 2-Methyl-1,5-diaminopentan, 1,3-Diaminopentan, Dipropylentriamin, Kokosalkylamin und 1,2-Diaminocyclohexan ausgewählt ist.

6. Eine Zusammensetzung gemäss wenigstens einem der vorstehenden Ansprüche, worin Komponente a) aus Diglycidylether von Bisphenol A, Diglycidylether von Bisphenol F, Polyglycidylether von mehrwertigen Phenol- oder Kresolnovolaks, Mono- oder Polyglycidylether von mono- oder polyhydrischen cycloaliphatischen Alkoholen, Mono- oder Polyglycidylether von mono- oder polyhydrischen aliphatischen Alkoholen ausgewählt ist.

7. Eine Zusammensetzung gemäss wenigstens einem der vorstehenden Ansprüche, worin Komponente a) ein Gemisch aus einem Epoxidharz, das im Durchschnitt mehr als eine Epoxidgruppe pro Molekül enthält, und wenigstens einem reaktiven Verdünnungsmittel ist.

8. Eine Zusammensetzung gemäss wenigstens einem der vorstehenden Ansprüche, worin Komponente a) ein Gemisch aus einem Epoxidharz, das im Durchschnitt mehr als eine Epoxidgruppe pro Molekül enthält, und einem cyclischen Carbonat ist.

9. Eine Zusammensetzung gemäss Anspruch 8, worin das cyclische Carbonat aus Ethylencarbonat, 1,2-Propylencarbonat und 1,2-Butylencarbonat ausgewählt ist.

10. Eine Zusammensetzung gemäss wenigstens einem der vorstehenden Ansprüche, die zusätzlich anorganische und/oder organische Additive umfasst, die aus Verlaufmitteln, Schaumverhütungsmitteln, Antiablaufmitteln, Pigmenten, Verstärkungsmitteln, Füllstoffen, Elastomeren, Stabilisatoren, Streckmitteln, Weichmachern, Flammschutzmitteln, Beschleunigern, Färbemitteln, Fasersubstanzen, thixotropen Mitteln, antikorrosiven Pigmenten und Lösungsmitteln ausgewählt sind.

11. Eine Zusammensetzung gemäss Anspruch 10, wobei der Beschleuniger aus Salicylsäure, Benzyldimethylamin, Calciumnitrat, 2,4,6-Tris(dimethylaminomethyl)phenol ausgewählt ist.

12. Ein gehärtetes Material, das durch Härten einer Zusammensetzung gemäss wenigstens einem der vorstehenden Ansprüche erhalten ist.

13. Verwendung einer Zusammensetzung gemäss wenigstens einem der vorstehenden Ansprüche zur Gewinnung von Schutzbeschichtungen und Klebern.

14. Verwendung einer Härtermischung b) als Härtungsmittel, wobei der besagte Härter eine flüssige Härtermischung mit einer Viskosität von weniger als 150 000 mPa·s bei 25 °C ist, die Folgendes umfasst:
b1) eine Aminverbindung, die aus einem aliphatischen, cycloaliphatischen und araliphatischen Amin, einzeln oder gemischt, ausgewählt ist, wobei die besagte Aminverbindung im Durchschnitt pro Molekül wenigstens zwei an Stickstoffatome gebundene reaktive Wasserstoffatome enthält;
und
b2) einen polymeren Phenolnovolak, und worin der Phenolnovolak in einer Menge von 46 bis 62 Gew.-%, bezogen auf das Gesamtgewicht der Härtermischung b1) und b2), verwendet wird.

## Revendications

1. Une composition durcissable comprenant :
a) une résine époxy contenant en moyenne plus d'un groupe époxy par molecule ;
b) comme agent durcissant, un durcisseur hybride, ledit durcisseur étant un mélange durcisseur liquide ayant une viscosité de moins de 150 000 mPa·s à 25°C, comprenant :
b1) un composé aminique choisi parmi les amines aliphatiques, cycloaliphatiques et araliphatiques, ledit composé aminique contenant, en moyenne par molecule, au moins deux atomes d'hydrogène reactifs liés à des atomes d'azote ; et
b2) un phénol novolaque polymère, ledit novolaque étant utilisé dans une quantité de 46 % à 62 % en poids, sur la base du poids total du mélange durcisseur b1) et b2).

2. Une composition selon la revendication 1, dans laquelle le phénol novolaque polymère est utilisé dans une quantité de 47 % à 60 % en poids, sur la base du poids total du mélange durcisseur b1) et b2).

3. Une composition selon l'une quelconque des revendications 1 et 2, dans laquelle le phénol novolaque polymère est un homopolymère resultant de la condensation d'un composé phénolique de formule (I) avec le formaldéhyde (paraformaldéhyde) ou un copolymère de différents composés phénoliques de formule (I) avec le formaldéhyde (paraformaldéhyde) : 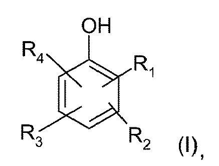 ou, dans la formule (I), R₁, R₂, R₃, R₄, indépendamment l'un de l'autre, représentent H, des radicaux alkyle ramifiés ou non ramifiés contenant 1 a 15 atomes de carbone.

4. Une composition selon au moins l'une des revendications précédentes, dans laquelle le phénol novolaque polymère comprend des composés phénoliques libres n'ayant pas réagi, de préférence des composés de formule (I), dans une quantité de pas plus de 10 %, de préférence de moins de 5 % et de la façon que l'on préfère le plus, de moins de 1 % en poids, sur la base du poids total du mélange durcisseur b1) et b2).

5. Une composition selon au moins l'une des revendications précédentes, dans laquelle, comme composant b1), est utilisée une amine choisie parmi la diéthylènetriamine, le 2-méthyl-1,5-diaminopentane, le 1,3-diaminopentane, la dipropylènetriamine, une alkylamine de coco et le 1,2-diaminocyclohexane.

6. Une composition selon au moins l'une des revendications précédentes, dans laquelle le composant a) est choisi parmi l'éther diglycidylique du bisphénol A, l'éther diglycidylique du bisphénol F, l'éther polyglycidylique de phénol ou crésol novolaques polyvalents, l'éther mono- ou polyglycidylique d'alcools cycloaliphatiques mono- ou polyhydriques, l'éther mono- ou polyglycidylique d'alcools aliphatiques mono- ou polyhydriques.

7. Une composition selon au moins l'une des revendications précédentes, dans laquelle le composant a) est un mélange d'une résine époxy contenant en moyenne plus d'un groupe époxy par molecule et au moins un diluant reactif.

8. Une composition selon au moins l'une des revendications précédentes, dans laquelle le composant a) est un mélange d'une résine époxy contenant en moyenne plus d'un groupe époxy par molecule et un carbonate cyclique.

9. Une composition selon la revendication 8, dans laquelle le carbonate cyclique est choisi parmi le carbonate d'éthylène, le carbonate de 1,2-propylène et le carbonate de 1,2-butylène.

10. Une composition selon au moins l'une des revendications précédentes, qui de plus comprend des additifs inorganiques et/ou organiques choisis parmi les additifs de contrôle d'écoulement, les agents anti-mousse, les agents anti-coulure, les pigments, les agents de renforcement, les charges, les élastomères, les stabilisants, les agents d'allongement, les plastifiants, les retardateurs de flamme, les accélérateurs, les colorants, les substances fibreuses, les agents thixotropes, les pigments anticorrosifs et les solvants.

11. Une composition selon la revendication 10, dans laquelle l'accélérateur est choisi parmi l'acide salicylique, la benzyldiméthylamine, le nitrate de calcium, le 2,4,6-tris(diméthylaminométhyl)phénol.

12. Une matière durcie, obtenue par le durcissement d'une composition selon au moins l'une des revendications précédentes.

13. Utilisation d'une composition selon au moins l'une des revendications précédentes pour fournir des revêtements protecteurs et des adhésifs.

14. Utilisation d'un mélange durcisseur b) comme agent de durcissement, dans laquelle ledit durcisseur est un mélange durcisseur liquide ayant une viscosité de moins de 150 000 mPa·s à 25°C comprenant
b1) un composé aminique choisi parmi une amine aliphatique, cycloaliphatique, araliphatique seule ou en des mélanges, ou ledit composé aminique contient, en moyenne par molécule, au moins deux atomes d'hydrogène reactifs liés à des atomes d'azote ; et
b2) un phénol novolaque polymère, et ou le phénol novolaque est utilisé dans une quantité de 46 % a 62 % en poids, sur la base du poids total du mélange durcisseur b1) et b2).
